# EUROPEAN PATENT SPECIFICATION

(11) **EP 2 358 928 B1**
(45) Date of publication and mention of the grant of the patent: **07.09.2016**
(21) Application number: 09829366.5
(22) Date of filing: 25.11.2009
(51) Int. Cl.: C25D 3/64, C25C 1/20, C25D 17/12, G01N 27/30, C25D 21/18, C25D 11/34, C25B 1/00

(54) **METHOD FOR GREEN CHLORINATION OF SILVER**
VERFAHREN ZUR GRÜNCHLORIERUNG VON SILBER
PROCÉDÉ DE CHLORATION D ARGENT

(30) Priority: 26.11.2008 MY 0804795
(43) Date of publication of application: 24.08.2011
(73) Proprietor: Mimos Berhad, 57000 Kuala Lumpur (MY)
(72) Inventor: AHMAD, Mohd, Rais, 57000 Kuala Lumpur (MY)
(74) Representative: Bailey, Jennifer Ann
(86) International application number: PCT/MY2009/000200
(87) International publication number: WO 2010/062162

(56) References cited:
- JP-A- 62 214 344
- JP-A- 2005 292 022
- JP-A- 2007 151 836
- KR-B1- 0 135 367
- HUANG I-Y ET AL: "Improvement of integrated Ag/AgCl thin-film electrodes by KCl-gel coating for ISFET applications", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 94, no. 1, 15 August 2003 (2003-08-15), pages 53-64, XP004438558, ISSN: 0925-4005, DOI: 10.1016/S0925-4005(03)00326-5

## Description

### FIELD OF THE INVENTION

This invention relates to chemical process for chlorination of silver materials. More specifically this invention relates to electrochemical method for chlorination of silver material whereby the reagent can be regenerated and the by-products can be recovered for reuse. Moreover, this method does not produce toxic or flammable chemicals.

### BACKGROUND OF THE INVENTION

Electrochemical measurement based on potentiometric technique is widely adopted for fast and inexpensive approach for quantitative analysis of ionic species. We are mainly interested in analysis of nitrate, phosphate, potassium, calcium, magnesium, pH and ammonium concentrations, or more appropriately, activities for the following applications;
i) In situ measurement of nitrate, phosphate, calcium and magnesium soil macronutrients
ii) In vivo measurement of nitrate, phosphate, calcium and magnesium plant macronutrients in tree sap
iii) Analysis of nitrate, phosphate, ammonium and pH in rivers and ground water due to excessive use of fertilizers or run off

Silver-silver chloride electrode is the most common type of electrode employed for analysis of ionic chemical species using potentiometric technique based on ion selective electrode (ISE) or ion sensitive field effect transistor (ISFET). Three forms of silver materials are commonly adopted as starting materials for silver-silver chloride electrode - silver wires with 0.1 to 1 mm diameter, thick film silver paste with 20 to 50 micrometer thickness formed by screen printing of silver paste in mixture of organic solvents, and metallic silver foil or disc. Silver chloride layer is often formed directly on the surface of silver materials by direct spontaneous or voltage-supplied electrochemical chlorination of silver. Hazardous chemicals such as ferric chloride, hydrochloric acids and chlorides of sodium and potassium are usually used.

Formation of chloride of silver (silver chloride) on silver materials of different forms - wire, dried thick film paste and foil, is critical in preparation of silver-silver chloride electrode (Ag-AgCl). This type of electrode is known as the Electrode of the Second Kind or the electrode of metal and its sparingly soluble halide is the most widely used electrode as ion-selective electrode chemical sensors (ISE) and reference electrode. The Ag-AgCl electrode undergoes the following overall reduction-oxidation reaction during transfer of sensor signal;

Ag + Cl ⇄ AgCl + e

Chlorination of silver or halogenation of metals in general, as described in the prior arts and using conventional processes, uses hazardous chemicals such as chlorine gas, hydrochloric acid and ferric chloride. Existing method for chlorination of silver as described in the prior arts and using conventional processes, generates flammable and green house gases such as hydrogen and methane. Moreover, chlorination of silver or halogenation of metals in general, as described in the prior arts generates large quantities of hazardous aqueous wastes.

United States patent 2,311,466 discloses method for chlorination of metals and semiconductors such as titanium, silicon and germanium using highly hazardous chlorine gas at high temperature into its tetrachlorides (TiCl₄), SnCl₄, GeCl₄) that can be separated efficiently by simple distillation.

Likewise United States patent 3,399,029 discloses a method of using highly corrosive chlorine gas at high temperature to chlorinate Group II, IIIb and IV elements, to produce its volatile tetrachloride such as silicon tetrachloride (SiCl₄).

A widely practiced procedure for forming silver chloride on silver materials uses electrochemical method of providing chloride from solution of metal chlorides or hydrochloric acid to oxidized silver surface. A. Simonis et al (Electrochimica Acta 51 (2005) 930-937; Miniaturized reference electrodes for field-effect sensors compatible to silicon chip technology) uses electrochemical method to chlorinate electron-beam sputtered silver in potassium chloride solution. In the subsequent step, membranes are deposited on silver-silver chloride to function as reference electrode. Likewise, I-Yu Huang et al (Sensors and Actuators B 94 (2003) 53-64; Improvement of integrated silver-silver chloride thin-film electrodes by potassium chloride-gel coating for ISFET applications) electrochemically chlorinate DC-sputtered titanium, palladium and silver films in 0.1 M hydrochloric acid at a constant 1.0V voltage.

All of the known methods generate large quantities of hazardous aqueous waste, as for example described in I-Yu Huang et al (Sensors and Actuators B 94 (2003) 53:64). This requires costly disposal process and contributes to environmental pollution and water contamination. The electrochemical process in the prior art often generates highly flammable, hard-to-detect, hydrogen and becomes a serious safety problem in an enclosed lab environment.

The present invention discloses a method of chlorination of silver wire, thick film paste or disc using imidazolium chloride reagent, whereby the reagent can be regenerated and the by-products can be recovered for reuse. The method for chlorination of silver materials in the form of wire, thick film paste and metallic disc is environmentally friendly, efficient, cost effective and produces good silver-silver chloride electrode. The application of this method decreases the amount of discharge of hazardous chlorine and reduces the dependency of utilising acid for production of silver chloride.

### SUMMARY OF THE INVENTION

It is an object of the present invention to provide a method for chlorination of silver materials in the forms of wire, thick film paste and metallic sheet or disc.

It is another object of the present invention to provide a method that is friendly to the environment since the chlorination process does not produce hazardous chemicals or flammable gas and the by-products of this reaction can be recovered for reuse.

It is yet another object of the present invention to provide a method for preparing silver-silver chloride electrode comprising; screen printing a thick film silver on polymer substrate. curing in an oven at high temperature, screen printing a solder mask paste providing a circular well shape of silver window while covering the rest of the silver materials except on the well and electrical contacts, connecting the electrical contact to an anode of a DC which deliver a constant voltage supply, connecting a platinum wire to a cathode of an electrochemical setup comprising an electrolyte containing a regenerative imidazolium chloride reagent, running the electrochemical setup thereby chlorinating the thick film silver.

In a first aspect of the invention, there is provided an electrochemical setup for chlorination of silver materials in accordance with claim 1. Embodiments of the first aspect of the invention are defined by claims 2-7.

It is yet a further another object of the present invention to provide a method for preparing silver-silver chloride electrode.

In a second aspect of the invention, there is provided an electrochemical setup for chlorination of silver materials in accordance with claim 1. Embodiments of the first aspect of the invention are defined by claims 2-7

The above and other object of the present invention is achieved by providing an electrochemical setup includes position the electrode containing silver materials in the anode and a platinum wire at the cathode. A DC voltage supply between 1 to 5 volts oxidizes the silver surface which subsequently receives chloride from imidazolium chloride solution to produce silver chloride on silver wire, thick film or disc. The imidazolium chloride reagent can be in aqueous solution or polar organic solvents or naturally exists in ionic liquid form. In the later case no solvent is required for the electrochemical process to take place. The imidazolium radical cation decomposes to produce a stabilized organic (hydrocarbon) radical and an imidazole molecule. The stabilized radical recombines to produce volatile organic compound that can be recovered by simple distillation. The chlorination reagent can be regenerated by re-introducing the stabilized group at N1.

### BRIEF DESCRIPTION OF THE DRAWINGS

For a fuller understanding of the nature of the present invention, reference should be made to the following detailed description taken in connection with the accompanying drawings in which:
**FIG. 1** illustrates preferred embodiment for chlorination method using regenerative imidazolium reagent
**FIG. 2** illustrates overall chlorination process using reagent **1**
**FIG. 3** illustrates regenerative imidazolium reagents (X = Cl) that can be used to chlorinate silver
**FIG. 4** illustrates electrochemical setup for chlorination using regenerative imidazolium reagent
**FIG. 5** illustrates plot of chloride signal versus log of chloride activity for screen-printed thick film silver-silver chloride electrode
**FIG. 6** illustrates plot of chloride signal versus log of chloride activity for wire silver-silver chloride electrode

### DETAILED DESCRPTION OF THE PREFERRED EMBODIMENT

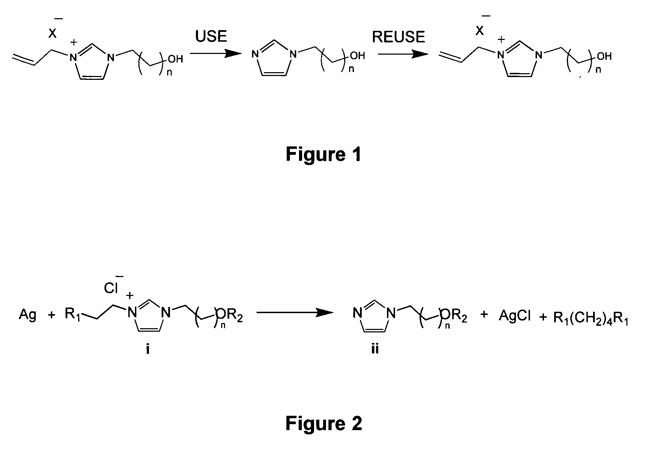

In one embodiment the imidazolium reagents present in its un-protected hydrophilic hydroxyl (alcohol) form, dissolved in water or polar solvents. During electrochemical chlorination of silver, the radical cation reactive intermediate releases a stabilized organic radical and generates imidazole molecule. The reagent can be regenerated by re-introducing the stabilized group at N₁. **FIG.1** illustrates the application of imidazolium reagent in aqueous or polar organic solvents for transferring halide anion (chloride in the case of silver chloride) electrochemically to oxidized silver electrode. This invention discloses the use of regenerative imidazolium chloride as the chlorination reagent in electrochemical setup, whereby a platinum wire acts as the cathode and the silver materials to be oxidized as the anode. Neutral imidazole molecule ii is a versatile precursor for this reaction and regenerative imidazolium chloride i is a generic reagent in the chlorination process as illustrated in **FIG.2****.**

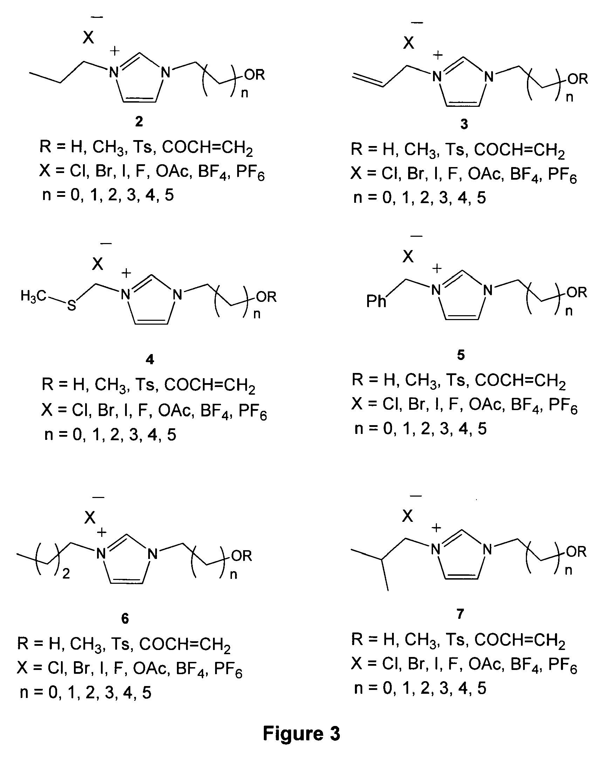

A wide range of imidazolium chlorides as illustrated in **FIG. 3** can be used to carry out the environmentally friendly chlorination of silver materials. The following examples illustrate further the use of these reagents.

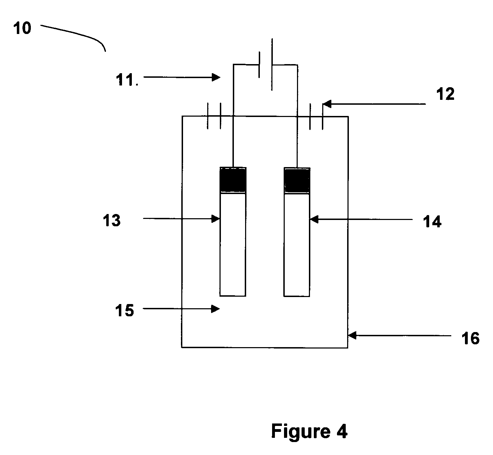

The disclosed environmentally friendly chlorination of silver requires simple, economical and efficient electrochemical setup as illustrated in **FIG.4****.** In the electrochemical setup illustrated in **FIG.4****,** the imidazolium reagent commonly presents in aqueous solution. Alternatively the imidazolium chloride can be dissolved in a mixture of deionized water and polar solvents such as dimethyl sulfoxide, tetrahydrofuran and alcohols. When high concentration of reagent is preferred and the imidazolium reagent exists in its ionic liquid form, no dissolution in water or polar solvent is necessary. In this setup electron is supplied by the platinum electrode in the cathode position to oxidize the silver materials to silver cation. The silver cation subsequently reacts with chloride in the solution to produce silver chloride layer on top of silver layer. In order to sustain the chlorination process positive charge build up must be avoided due to depletion of chloride ion. Thus during the process imidazolium cation receives one electron and decomposes to neutral imidazole molecule and a stabilized organic (normally hydrocarbon) radical. Stabilized radical due to double-bond delocalization or heteroatom stabilization is important to accelerate decomposition of imidazolium radical cation and promotes chlorination of silver. The organic radical recombines to form volatile hydrocarbon by-products that can be removed by simple distillation. In a different embodiment the electrochemical cell is a round-bottom flask that sits on a heating mantle, whereby removal of the hydrocarbon by-products can be carried out without disassembling the setup.

Mechanistic pathway for chlorination of silver materials in environmentally friendly process using regenerative hydrophilic imidazolium chloride is illustrated in Scheme 1.

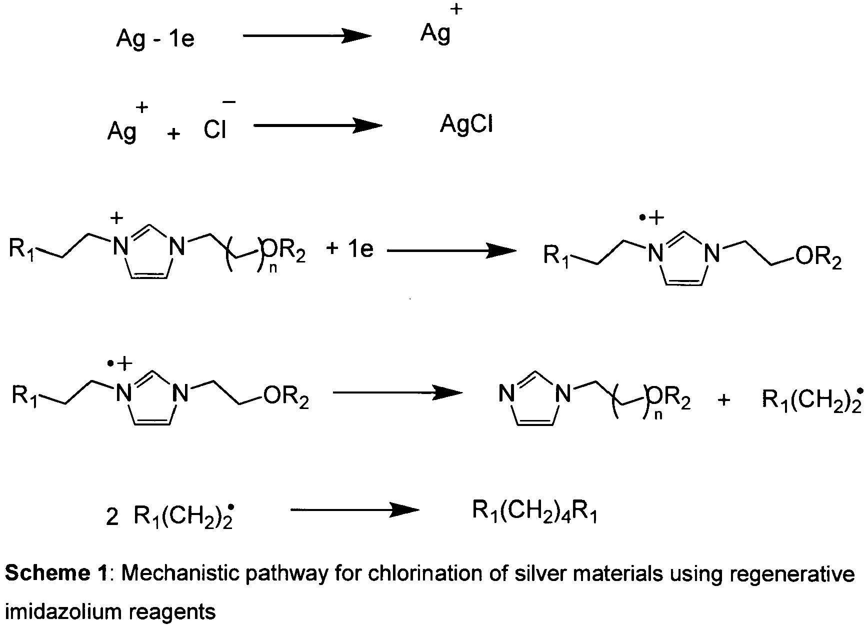

Additional features of the present invention are provided in the following examples, which should not be construed as limiting the claims in any way.

### Example 1

### Chlorination of Thick Film Silver Paste Using 2-Propenyl-1-Ethanol Imidazolium Chloride (3)

Thick film silver is screen printed on 0.3 mm thick polyester substrate followed by oven curing at 120 °C to remove volatile alcohols and to give 20 micrometer of dry silver paste. Solder mask paste was screen printed five times on top of each other to give circular well shape of silver window and total thickness of 0.5 mm, while covering the rest of the silver materials except on the well and electrical contacts. The appropriate silver pin electrical contact is connected to the anode of DC supply in FIG. 4 that deliver a constant voltage supply of 3 volt. One molar solution of 2-propenyl-1-ethanol imidazolium chloride (3) in deionized water is used as the chlorination reagent. 2 Millimeter diameter platinum wire is connected to cathode of **FIG. 4****.** Chlorination takes place within 2 minutes that can be easily observed by coloration of the targeted well due to formation of silver chloride. Other wells not connected electrically remain silvery white. In a preferred arrangement continuous flow of argon or nitrogen gas is used as inert blanket.

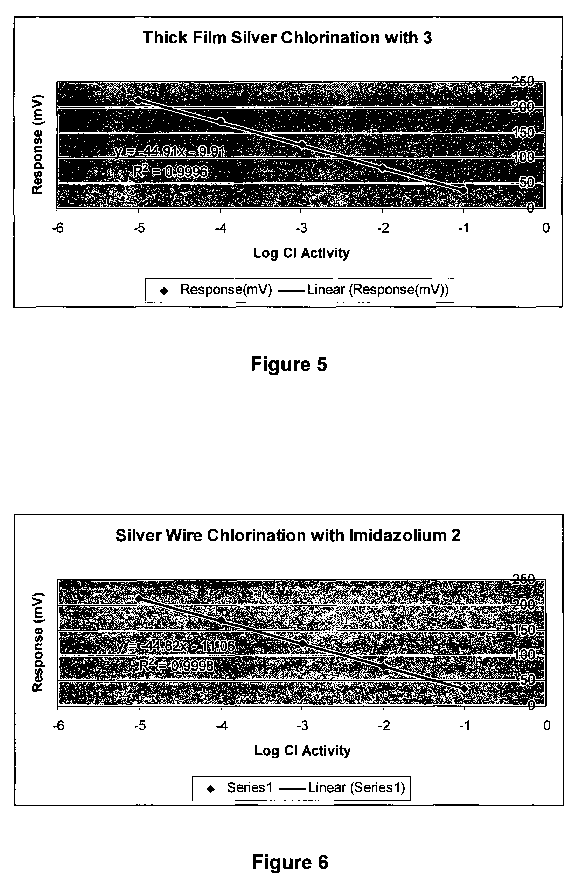

Upon completion of chlorination process the silver-silver chloride electrode is connected to ion meter (Orion Thermo 5-Star) and conventional double-junction reference electrode (Orion with potassium nitrate or lithium acetate external solution) is used to complete the circuit. Chloride signal of this setup is monitored in potassium chloride calibration solutions (10⁻¹ to 10⁻⁵ M). The result of the voltage response versus logarithm of the chloride ion activities is provided in **Table 1.** The result is plotted as illustrated in **FIG. 5****.** The chlorination of thick film silver with 3 volt DC supply using 2-propenyl-1-ethanol imidazolium chloride **(3)** gives -44.9 mV/decade of response with very good linearity (correlation coefficient of 0.9996).

**Table 1: Chloride response of screen-printed silver-silver chloride electrode versus conventional double-junction reference electrode in KCl solutions.**

| **Chloride Ion Activity** | **Response(mV)** |
|---|---|
| -5 | 212.9 |
| -4 | 171.9 |
| -3 | 125.4 |
| -2 | 79.2 |
| -1 | 34.7 |

### Example 2

### Chlorination of Silver Wire Using 3-n-Propyl-1-Ethanol Imidazolium Chloride (2)

Silver wire (Aldrich Chemical Company) with 0.5 mm was cut into 4-cm long pieces. Each piece is polished evenly with sand paper to roughen the surface and remove oxide impurities. The roughened silver wire is wiped with ethanol or isopropyl alcohol before it is connected to the anode in electrochemical setup described in **FIG. 4****.**

The top end (not roughened) of the silver wire is connected to the anode of DC supply in **FIG. 4** that deliver a constant voltage supply of 3 volt. One molar solution of 3-n-propyl-1-ethanol imidazolium chloride (2) in deionized water is used as the chlorination reagent. 2 Millimeter diameter platinum wire is connected to cathode of **FIG. 4****.** Chlorination takes place within 2 minutes and the formation of silver chloride layer can be easily observed by coloration of the roughened silver wire immersed in the solution. In a preferred arrangement, continuous flow of argon or nitrogen gas is used as inert blanket.

Upon completion of chlorination process the silver-silver chloride wire electrode is connected to ion meter (Orion Thermo 5-Star) and conventional double-junction reference electrode (Orion with potassium nitrate or lithium acetate external solution) is used to complete the circuit. Chloride signal of this setup is monitored in potassium chloride calibration solutions (10⁻¹ to 10⁻⁵ M). The result of the voltage response versus logarithm of the chloride ion activities is provided in **Table 2.** The result is plotted as illustrated in **FIG. 6****.** The chlorination of 0.5 mm diameter silver wire with 3 volt DC supply using 3-n-propyl-1-ethanol imidazolium chloride (2) gives -44.8 mV/decade of response with very good linearity (correlation coefficient of 0.9998).

**Table 2: Chloride response of wire silver-silver chloride electrode versus conventional double-junction reference electrode in KCl solutions.**

| **Chloride Ion Activity** | **Response(mV)** |
|---|---|
| -5 | 211.9 |
| -4 | 169.5 |
| -3 | 124.2 |
| -2 | 77.7 |
| -1 | 33.7 |

### Example 3

### Preparation of 1-Ethanol Imidazole (1)

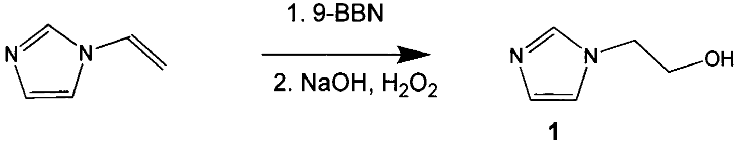

A 100-mL round-bottom flask, equipped with reflux condenser and magnetic stirrer was flame dried while flushed with nitrogen. Anhydrous tetrahydrofuran (THF) 50 mL was added into the flask via syringe.

THF solution of 0.5M 9 borabicyclo[3.3.1]nonane (9-BBN) (0.02 mole) was added, followed by 0.021 mole of freshly distilled 1-vinyl imidazole (purchased from Aldrich Chemical Company). The reaction mixture was refluxed for 5 hours. The reaction mixture was gradually cooled to room temperature and 25 mL of 3M sodium hydroxide solution was added. Later 25 mL of 30% hydrogen peroxide was added dropwise into the flask and the mixture was stirred for 5 hours to complete oxidation. The reaction mixture was extracted with 20-mL portions of ethyl ether, and the combined extracts dried with anhydrous magnesium sulfate. Distillation under reduced pressure gave 83% of 1.

### Example 4

### Preparation of 3-n-Propyl-1-Ethanol Imidazolium Chloride (2) and 3-n-Butyl-1-Ethanol Imidazolium Chloride (6)

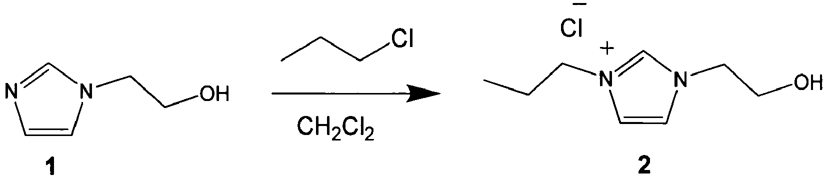

A 50-mL three-necked, round-bottomed flask, equipped with thermometer, nitrogen inlet, addition funnel, magnetic stirrer and reflux condenser was flame dried and flushed with nitrogen. The flask was charged with 25 mL of anhydrous dichloromethane. Freshly distilled 1-ethanol imidazole (1, 0.01 mol) was added into the flask. The flask was chilled with ice-water bath and 1-chloropropane (0.011mol) in 10 mL of anhydrous dichloromethane was added cautiously into the flask with continous stirring over 20 minutes. The solution was heated under reflux for 14 hours and then allowed to cool to room temperature. The dichloromethane solvent was removed under vacuum distillation through Vigreaux column to give 81% of imidazolium chloride **2.** *n*-Butyl-1-ethanol imidazolium chloride (6) can be prepared following this procedure from 1-chlorobutane.

### Example 5

### Preparation of 2-Propenyl-1-Ethanol Imidazolium Chloride (3)

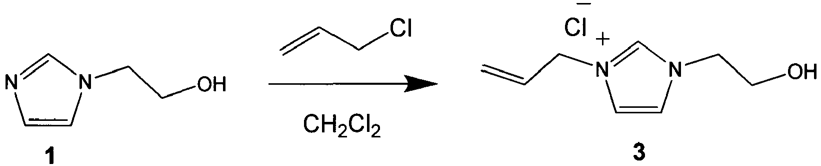

A 50-mL three-necked, round-bottomed flask, equipped with thermometer, nitrogen inlet, addition funnel, magnetic stirrer and reflux condenser was flame dried and flushed with nitrogen. The flask was charged with 25 mL of anhydrous dichloromethane. Freshly distilled 1-ethanol imidazole **1** (0.01 mol) was added into the flask. The flask was chilled with ice-water bath and 3-chloro-1-propene (0.011mol) in 15 mL of anhydrous dichloromethane was added cautiously into the flask with continous stirring over 30 minutes. The solution was heated under reflux for 8 hours and then allowed to cool to room temperature. The dichloromethane solvent was distilled under to give 87% of imidazolium chloride **3.**

Although the preferred embodiments of the present invention have been described herein, the above descriptions are merely illustrative. Further modification of the invention herein disclosed will occur to those skilled in the respective arts and all such modifications are deemed to be within the scope of the invention as defined by the appended claims.

## Claims

1. An electrochemical setup (10) for chlorination of silver materials comprising:
a regulated DC supply (11):
an inlet and outlet (12) of nitrogen or argon gas ambient:
at least one silver material at the anode (14):
an electrolyte:
a platinum cathode (13) which supplies electron to oxidize the silver materials (14) to silver cations, the silver cation reacts with chloride in the electrolyte to produce silver chloride layer on top of silver material; and
an inert chamber body, **characterised in that** the electrolyte contains a regenerative imidazolium chloride reagent which decomposes to form imidazolium cation and chloride ions, the imidazolium cation receives one electron and decomposes to neutral imidazole molecule and a stabilized organic radical, the organic radical recombines forming a volatile hydrocarbon by-product in the inert chamber body.

2. The electrochemical setup of claim 1 **characterised in that** the silver material is in metallic wire, sheet or foil form, or is a thick film screen printed.

3. The electrochemical setup of claim 2 **characterised in that** the thick film screen printed is cured in the oven at temperature of 120°C.

4. The electrochemical setup of claim 1 **characterised in that** the regenerative imidazolium chloride reagent is dissolved in deionized water, or a mixture of deionized water and high molecular weight alcohols

5. The electrochemical setup of claim 1 **characterised in that** the regenerative imidazolium chloride reagent has the following structure; 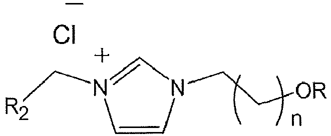
R = H, CH₃, T_{s,} COCH=CH₂
n = 0, 1, 2, 3, 4, 5
R₂ = CH₂CH₃ (reagent 2),
CH=CH₂ (reagent 3),
SCH₃ (reagent 4),
Ph (reagent 5),
(CH₂)₂CH₃ (reagent 6),
CH(CH₃)₂ (reagent 7)

6. The electrochemical setup of claim 1 **characterised in that** the volatile hydrocarbon by-products may be removed by a simple distillation process.

7. The electrochemical setup of claim 1 **characterised in that** the setup is made up of a round-bottom flask that sits on a heating mantle, whereby removal of the hydrocarbon by-products can be carried out without disassembling the setup.

8. A method for preparing silver-silver chloride electrode comprising:
providing a silver material;
connecting the silver material to an anode of a DC which deliver a constant voltage supply;
connecting a platinum wire to a cathode of an electrochemical setup comprising an electrolyte; and
running the electrochemical setup thereby chlorinating the silver material,
**characterised in that** the electrolyte contains a regenerative imidazolium chloride reagent.

9. The method of claim 8 **characterised in that** the silver material is prepared by:
screen printing a thick film silver on polymer substrate,
curing in an oven at high temperature;
screen printing a solder mask paste providing a circular well shape of silver window while covering the rest of the silver materials except on the well and electrical contacts,

10. The method of claim 9 **characterised in that** the reagent is dissolved in deionized water.

11. The method of claim 9 **characterised in that** the steps are carried out in an inert blanket of a continuous flow of argon or nitrogen gas.

12. The method of claim 9 **characterised in that** the screen printing a solder mask step is repeated at least five times to provide layer of solder mask paste on top of each other with a total thickness of 0.5 mm.

13. The method of claim 9 **characterised in that** the electrical contact is provided by silver pin.

14. The method of claim 9 **characterised in that** the regenerative imidazolium chloride reagent has the following structure; 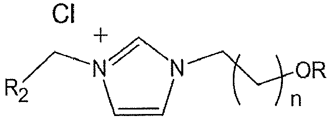
R = H, CH₃, Tₛ, COCH=CH₂
n = 0, 1, 2, 3, 4, 5
R₂ = CH₂CH₃
CH=CH₂
SCH₃
Ph
(CH₂)₂CH₃
CH(CH₃)₂

## Patentansprüche

1. Elektrochemische Anordnung (10) zum Chlorieren von Silbermaterialien, umfassend:
eine regulierte Gleichstromzufuhr (11);
einen Einlass und Auslass (12) von Stickstoff- oder Argongasatmosphäre;
mindestens ein Silbermaterial an der Anode (14);
einen Elektrolyten;
eine Platinkatode (13), die Elektronen zum Oxidieren der Silbermaterialien (14) zu Silberkationen liefert, wobei das Silberkation mit Chlorid in dem Elektrolyt reagiert, um eine Silberchloridschicht auf dem Silbermaterial herzustellen; und
einen inerten Kammerkörper, **dadurch gekennzeichnet, dass** der Elektrolyt ein regeneratives Imidazoliumchloridreagens enthält, das sich unter Bildung von Imidazoliumkation und -chloridionen abbaut, das Imidazoliumkation ein Elektron erhält und sich zu neutralem Imidazoliummolekül und einem stabilisierten organischen Radikal abbaut, das organische Radikal rekombiniert, um ein flüchtiges Kohlenwasserstoff-Nebenprodukt in dem inerten Kammerkörper zu bilden.

2. Elektrochemische Anordnung nach Anspruch 1, **dadurch gekennzeichnet, dass** das Silbermaterial in Metalldraht-, -platten- oder -folienform vorliegt oder eine siebgedruckte Dickschicht ist.

3. Elektrochemische Anordnung nach Anspruch 2, **dadurch gekennzeichnet, dass** die siebgedruckte Dickschicht im Ofen bei einer Temperatur von 120 °C ausgehärtet wird.

4. Elektrochemische Anordnung nach Anspruch 1, **dadurch gekennzeichnet, dass** das regenerative Imidazoliumchloridreagens in entionisiertem Wasser oder einer Mischung von entionisiertem Wasser und hochmolekularen Alkoholen gelöst wird.

5. Elektrochemische Anordnung nach Anspruch 1, **dadurch gekennzeichnet, dass** das regenerative Imidazoliumchloridreagens folgende Struktur aufweist: 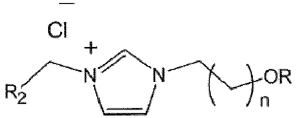
R = H, CH₃, Tₛ, COCH=CH₂
n = 0, 1, 2, 3, 4, 5
R₂ = CH₂CH₃ (Reagens 2),
CH = CH₂ (Reagens 3),
SCH₃ (Reagens 4),
Ph (Reagens 5),
(CH₂)₂CH₃ (Reagens 6),
CH(CH₃)₂ (Reagens 7).

6. Elektrochemische Anordnung nach Anspruch 1, **dadurch gekennzeichnet, dass** die flüchtigen Kohlenwasserstoffnebenprodukte durch ein einfaches Destillationsverfahren entfernt werden können.

7. Elektrochemische Anordnung nach Anspruch 1, **dadurch gekennzeichnet, dass** die Anordnung aus einem Grundkolben besteht, der auf einem Heizmantel sitzt, wobei die Entfernung der Kohlenwasserstoffnebenprodukte ohne Auseinandernehmen der Anordnung durchgeführt werden kann

8. Verfahren für die Herstellung einer Silber-Silberchloridelektrode, umfassend:
das Bereitstellen eines Silbermaterials;
das Anschließen des Silbermaterials an eine Anode eines Gleichstroms, der eine konstante Spannungslieferung abgibt;
das Anschließen eines Platindrahtes an eine Katode einer elektrochemischen Anordnung, die einen Elektrolyten umfasst; und
das Betreiben der elektrochemischen Anordnung, wodurch das Silbermaterial chloriert wird,
**dadurch gekennzeichnet, dass** der Elektrolyt ein regeneratives Imidazoliumchloridreagens enthält.

9. Verfahren nach Anspruch 8, **dadurch gekennzeichnet, dass** das Silbermaterial hergestellt wird durch:
Siebdrucken eines Dickschichtsilbers auf ein Polymersubstrat,
Aushärten in einem Ofen bei hoher Temperatur;
Siebdrucken einer Lötmaskenpaste, die eine runde Silberfensterwannengestalt bereitstellt, während sie den Rest der Silbermaterialien, mit Ausnahme der Wanne und der elektrischen Kontakte, bedeckt.

10. Verfahren nach Anspruch 9, **dadurch gekennzeichnet, dass** das Reagens in entionisiertem Wasser gelöst wird.

11. Verfahren nach Anspruch 9, **dadurch gekennzeichnet, dass** die Schritte in einer inerten Bedeckung einer kontinuierlichen Strömung von Argon- oder Stickstoffgas durchgeführt werden.

12. Verfahren nach Anspruch 9, **dadurch gekennzeichnet, dass** das Siebdrucken eines Lötmaskenschritts mindestens fünfmal wiederholt wird, um Schichten von Lötmaskenpaste aufeinander mit einer Gesamtdicke von 0,5 mm bereitzustellen.

13. Verfahren nach Anspruch 9, **dadurch gekennzeichnet, dass** der elektrische Kontakt durch Silberstift bereitgestellt wird.

14. Verfahren nach Anspruch 9, **dadurch gekennzeichnet, dass** das regenerative Imidazoliumchloridreagens die folgende Struktur aufweist: 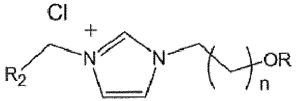
R = H, CH₃, Tₛ, COCH=CH₂
n = 0, 1, 2, 3, 4, 5
R₂ = CH₂CH₃
CH = CH₂
SCH₃
Ph
(CH₂)₂CH₃
CH(CH₃)₂

## Revendications

1. Configuration électrochimique (10) destinée à la chloration de matériaux en argent comprenant:
l'alimentation régulée de courant continu (11) ;
un orifice d'entrée et un orifice de sortie (12) d'atmosphère de gaz azote ou argon ;
au moins un matériau en argent au niveau de l'anode (14) ;
un électrolyte ;
une cathode en platine (13) qui fournit des électrons pour oxyder les matériaux en argent (14) en cations d'argent, le cation d'argent réagit avec le chlore dans l'électrolyte pour produire une couche de chlorure d'argent sur le dessus du matériau en argent; et
un corps d'enceinte inerte, **caractérisé en ce que** l'électrolyte contient un réactif chlorure d'imidazolium renouvelable qui se décompose pour former un cation d'imidazolium et des ions chlorure, le cation d'imidazolium reçoit un électron et se décompose en molécule d'imidazole neutre et radical organique stabilisé, le radical organique se recombine pour former un sous-produit hydrocarbure volatil dans le corps d'enceinte inerte.

2. Configuration électrochimique selon la revendication 1, **caractérisée en ce que** le matériau en argent se présente sous la forme d'un câble, d'une feuille ou d'un feuil métallique, ou est une sérigraphie en film épais.

3. Configuration électrochimique selon la revendication 2, **caractérisée en ce que** la sérigraphie en film épais est durcie dans l'étuve à une température de 120°C.

4. Configuration électrochimique selon la revendication 1, **caractérisée en ce que** le réactif chlorure d'imidazolium renouvelable est dissous dans de l'eau désionisée, ou un mélange d'eau désionisée et d'alcools de haut poids moléculaire.

5. Configuration électrochimique selon la revendication 1 **caractérisée en ce que** le réactif chlorure d'imidazolium renouvelable présente la structure suivante; 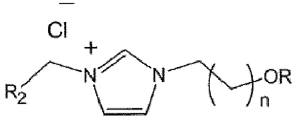
R = H, CH₃, Tₛ, COCH=CH₂
n = 0, 1, 2, 3, 4, 5
R₂ = CH₂CH₃ (réactif 2),
CH=CH₂ (réactif 3),
SCH₃ (réactif 4),
Ph (réactif 5),
(CH₂)₂CH₃ (réactif 6),
CH(CH₃)₂ (réactif 7)

6. Configuration électrochimique selon la revendication 1, **caractérisée en ce que** les sous-produits hydrocarbures volatils peuvent être retirés par un simple procédé de distillation.

7. Configuration électrochimique selon la revendication 1, **caractérisée en ce que** la configuration est constituée d'un flacon à fond rond qui repose sur un manteau chauffant, moyennant quoi l'élimination des sous-produits hydrocarbures peut être conduite sans démontage de la configuration.

8. Procédé de préparation d'une électrode d'argent-chlorure d'argent comprenant:
la préparation d'un matériau en argent;
la connexion du matériau en argent à une anode d'un courant continu qui délivre une tension constante;
la connexion d'un câble en platine à une cathode d'une configuration électrochimique comprenant un électrolyte; et
la mise en fonctionnement de la configuration électrochimique effectuant de là la chloration du matériau en argent,
**caractérisé en ce que** l'électrolyte contient un réactif chlorure d'imidazolium renouvelable.

9. Procédé selon la revendication 8, **caractérisé en ce que** le matériau en argent est préparé par:
sérigraphie d'un film épais d'argent sur un substrat polymère,
durcissement dans une étuve à température élevée;
sérigraphie d'une pâte de masque de soudure fournissant une forme de puits circulaire de fenêtre d'argent tout en recouvrant le reste des matériaux en argent excepté sur le puits et les contacts électriques.

10. Procédé selon la revendication 9, **caractérisé en ce que** le réactif est dissous dans de l'eau désionisée.

11. Procédé selon la revendication 9, **caractérisé en ce que** les étapes sont conduites sous un manteau inerte d'un écoulement continu de gaz argon ou azote.

12. Procédé selon la revendication 9, **caractérisé en ce que** la sérigraphie d'une étape de masque de soudure est répétée au moins cinq fois pour fournir une couche de pâte de masque de soudure sur le dessus l'une de l'autre avec une épaisseur totale de 0,5 mm.

13. Procédé selon la revendication 9, **caractérisé en ce que** le contact électrique est fourni par une broche en argent.

14. Procédé selon la revendication 9, **caractérisé en ce que** le réactif chlorure d'imidazolium renouvelable présente la structure suivante; 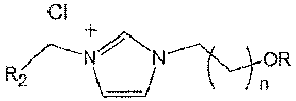
R = H, CH₃, Tₛ, COCH=CH₂
n = 0, 1, 2, 3, 4, 5
R₂ = CH₂CH₃
CH=CH₂
SCH₃
Ph
(CH₂)₂CH₃
CH(CH₃)₂.
